# FASCICULE DE BREVET EUROPEEN

(11) **EP 3 630 658 B1**
(45) Date de publication et mention de la délivrance du brevet: **25.12.2024**
(21) Numéro de dépôt: 18726845.3
(22) Date de dépôt: 01.06.2018
(51) Int. Cl.: B65G 47/90, B65B 19/34, B65G 47/91, A23P 20/20, B25J 15/00, A23C 19/09, A23C 19/16, B65B 5/06, B65B 25/06, B65B 35/36, B25J 11/00

(54) **DISPOSITIF DE PRÉHENSION À AIGUILLES POUR PRODUIT ALIMENTAIRE DÉFORMABLE**
GREIFVORRICHTUNG MIT NADELN FÜR VERFORMBARES LEBENSMITTELPRODUKT
GRIPPING DEVICE WITH NEEDLES FOR DEFORMABLE FOOD PRODUCT

(30) Priorité: 01.06.2017 FR 1754856
(43) Date de publication de la demande: 08.04.2020
(73) Titulaire: BEL, 92150 Suresnes (FR)
(72) Inventeur: HUMBERT, Patrice, 41100 Villetrun (FR); BEQUIN, Lionel, 41100 Vend me (FR); LE CALLOCH, Laurent, 53290 Bouessay (FR); LE SENECHAL, Pascal, 77120 Coulommiers (FR)
(74) Mandataire: Lavoix
(86) Numéro de dépôt international: PCT/EP2018/064525
(87) Numéro de publication internationale: WO 2018/220208

(56) Documents cités:
- WO-A1-2004/043151
- DE-U1- 202012 100 849
- FR-A1- 2 997 031
- JP-A- H07 256 582
- JP-U- S6 396 053
- NL-C- 81 915
- SOMMER AUTOM: "Needle Gripper pneumatic ST-Series", INTERNET CITATION, 9 August 2010 (2010-08-09), pages 25 - 31, XP007914333, Retrieved from the Internet <URL:http://www.smartech-automation.com/download/200771422523929347.pdf> [retrieved on 20100809]

## Description

La présente invention concerne un dispositif de préhension d'au moins un produit alimentaire déformable. L'invention concerne également une installation de production de produits alimentaires déformables comprenant un tel dispositif de préhension, et un procédé de déplacement d'un produit alimentaire déformable au moyen d'un tel dispositif de préhension.

Ce dispositif de préhension est plus particulièrement destiné à la prise et à la dépose d'au moins un produit alimentaire déformable pouvant être mou et/ou collant sur une ligne de production agro-alimentaire à haute cadence.

DE202012100849U1 divulgue un dispositif de préhension selon le préambule de la revendication 1.

SOMMER AUTOM : « Needle Gripper pneumatic ST-Series » divulgue ur dispositif de préhension ST-40 destiné à la manipulation de textiles et de matériaux mous ou poreux. Ce dispositif de préhension comprend une plaque dans laquelle sont ménagées des fentes et définissant une surface plane apte à la réception d'un produit. Le dispositif de préhension comprend également des aiguilles s'étendant à travers lesdites fentes, et un actionneur pour déplacer les aiguilles par rapport à la plaque entre une position déployée et une position rétractée.

Des dispositifs de préhension de produits alimentaires déformables sont connus.

EP 1750910 B1 divulgue un dispositif de préhension avec une surface de préhension partiellement convexe, et des paires aiguilles déplaçables jusqu'à des positions déployées à travers la surface de préhension.

WO 2004/043151 divulgue, un dispositif de préhension comprenant des organes de piquage, chaque organe de piquage comprenant une aiguille déplaçable relativement à un châssis une position déployée et une position rétractée. Le dispositif de préhension comprend également une plaque servant de support aux organes de piquage, lesdits organes de piquage s'étendant à travers cette plaque.

Ainsi, on connaît par exemple de WO2007/046715 A1 un dispositif de préhension de produits alimentaires déformables comprenant une pluralité de paires d'aiguilles. Ce type de dispositif est adapté à la préhension de produits alimentaires qui se tiennent tels que de la viande ou du poisson. Les produits sont manipulés congelés, ce qui facilite leur tenue et diminue les phénomènes de collage ou de déstructuration du produit alimentaire. Ce dispositif n'est toutefois pas adapté à la préhension de produits alimentaires manipulés non congelés voire à des températures positives. En effet, de tels produits alimentaires sont déformables, mous et collants et colleraient à un tel préhenseur entraînant des phénomènes d'encrassement et donc des problèmes d'hygiène.

On connaît également de JP2005333827 un dispositif de préhension d'un produit alimentaire déformable, comprenant au moins une paire d'aiguilles. Là encore, ce type de préhenseur n'est pas adapté à la préhension de produits alimentaires déformables, mous et collants. Il s'encrasse en effet rapidement et ne permet pas une dépose propre et rapide, à grande cadence, sans altération du produit alimentaire.

On connaît enfin de FR2997031 un dispositif de préhension d'une pluralité de produits alimentaires déformables, comprenant une plaque perforée définissant une pluralité de surfaces de réception des produits alimentaires, et un système d'aspiration pour plaquer les produits alimentaires contre les surfaces de réception par effet de succion. Un tel dispositif présente plusieurs inconvénients :
- encrassement rapide par le produit alimentaire lors de la phase d'aspiration et/ou collage lors de la dépose ;
- difficulté de nettoyage du dispositif ;
- pertes conséquentes par collage et déstructuration du produit alimentaire lors de son dépôt, par exemple dans le cas de roulés comportant un fourrage fromager entouré d'une feuille alimentaire de type charcuterie, le roulé se déroulant lors du soufflage ;
- nécessité que l'ensemble des produits alimentaires présente une forme très standardisée pour assurer une préhension efficace ; en effet, dès lors que la forme de l'un des produits alimentaires saisis dérive de ce standard, la préhension par aspiration contre la surface de réception est altérée et entraîne des pertes de charge, le détachement du produit alimentaire avant sa dépose, voire l'absence de prise du produit alimentaire.

Un objectif de l'invention consiste ainsi à permettre la prise, de manière automatisée et à forte cadence, d'au moins un produit alimentaire fragile, déformable, mou et collant, tout en limitant les phénomènes d'encrassement et de déformation, voire de déstructuration, dudit produit alimentaire, en particulier lorsque ce produit alimentaire comprend une enveloppe extérieure en un premier matériau alimentaire et un fourrage intérieur en un deuxième matériau alimentaire. Un autre objectif consiste à favoriser la nettoyabilité du dispositif de préhension utilisé à cet effet.

A cet effet, l'invention a pour objet un dispositif de préhension d'au moins un produit alimentaire déformable selon la revendication 1.

Selon des modes de réalisation particuliers de l'invention, le dispositif de préhension présente également les caractéristiques énoncées dans les revendications dépendantes.

L'invention a également pour objet une installation de production de produits alimentaires déformables comprenant chacun une enveloppe extérieure en un premier matériau alimentaire et un fourrage intérieur en un deuxième matériau alimentaire, selon la revendication 8.

L'invention a encore pour objet un procédé de déplacement d'un produit alimentaire déformable au moyen d'un dispositif de préhension tel que défini précédemment, selon la revendication 9 ou 10.

Selon des modes de réalisation particuliers de l'invention, le procédé de déplacement présente également une ou plusieurs des caractéristiques suivantes, prise(s) isolément ou suivant toute(s) combinaison(s) techniquement possible(s) :
- le produit alimentaire déformable comprend une enveloppe extérieure en un premier matériau alimentaire et un fourrage intérieur en un deuxième matériau alimentaire ;
- l'enveloppe et le fourrage ne présentent pas les mêmes textures ni les mêmes propriétés mécaniques ;
- le premier matériau alimentaire est constitué par :
   ∘ une tranche de viande, notamment un produit de salaison, en particulier une tranche de jambon, par exemple du jambon cru fumé, ou
   ∘ un produit végétal, par exemple une tranche de légume ou une feuille de purée de légume, ou
   ∘ un produit fromager, par exemple un fromage à pâte pressée, un fromage retexturé, ou un fromage à pâte filée, ou
   ∘ un produit de la mer, par exemple une tranche de poisson, une tranche de poisson fumé, un produit de salaison de poisson, une feuille d'algue, ou
   ∘ un produit à base d'algue, de poisson, de crustacé ou d'un mélange de ceux-ci ;
- le deuxième matériau alimentaire est constitué essentiellement de fromage à pâte molle ;
- le fromage à pâte molle est un fromage frais, un fromage fondu, un fromage frais fondu, ou un fromage à pâte filée ;
- le deuxième matériau alimentaire comprend au moins un intrant mélangé au fromage à pâte molle, le ou chaque intrant étant choisi parmi : les aromates, les herbes, les fruits, les fruits à coques, les légumes, les épices, les arômes, les colorants ; et
- le produit alimentaire est constitué par un fromage de petite taille type portion, par exemple un fil fromager ou un fil fromager enroulé.

D'autres caractéristiques et avantages de l'invention apparaîtront à la lumière de la description qui va suivre, donnée uniquement à titre d'exemple non limitatif et faite en se référant aux dessins annexés, dans lesquels :
- la Figure 1 est une vue générale, de dessus, d'une installation de production selon l'invention,
- la Figure 2 est une vue en perspective d'un produit alimentaire déformable produit par l'installation de la Figure 1,
- la Figure 3 est une vue en élévation d'un dispositif de préhension de l'installation de production de la Figure 1,
- la Figure 4 est une vue en perspective, de dessous, d'une tête de préhension du dispositif de préhension de la Figure 3,
- la Figure 5 est une vue en perspective, de dessous, d'une plaque perforée de la tête de préhension de la Figure 4,
- la Figure 6 est une vue en perspective, de dessus, de la plaque perforée de la Figure 5,
- la Figure 7 est une vue en perspective, de dessous, d'un détail de la Figure 4, une plaque perforée de la tête de préhension ayant été retirée.
- la Figure 8 est une vue en coupe, selon le plan marqué VIII-VIII sur la Figure 4, de la tête de préhension de la Figure 4,
- la Figure 9 est une vue en coupe, selon le plan marqué IX-IX sur la Figure 4, de la tête de préhension de la Figure 4, un système de piquage de la tête de préhension étant dans une configuration rétractée,
- la Figure 10 est une vue d'un détail marqué X sur la Figure 9, le système de piquage étant dans une configuration déployée, et
- la Figure 11 est une vue en perspective, de dessus, de la tête de préhension de la Figure 4.

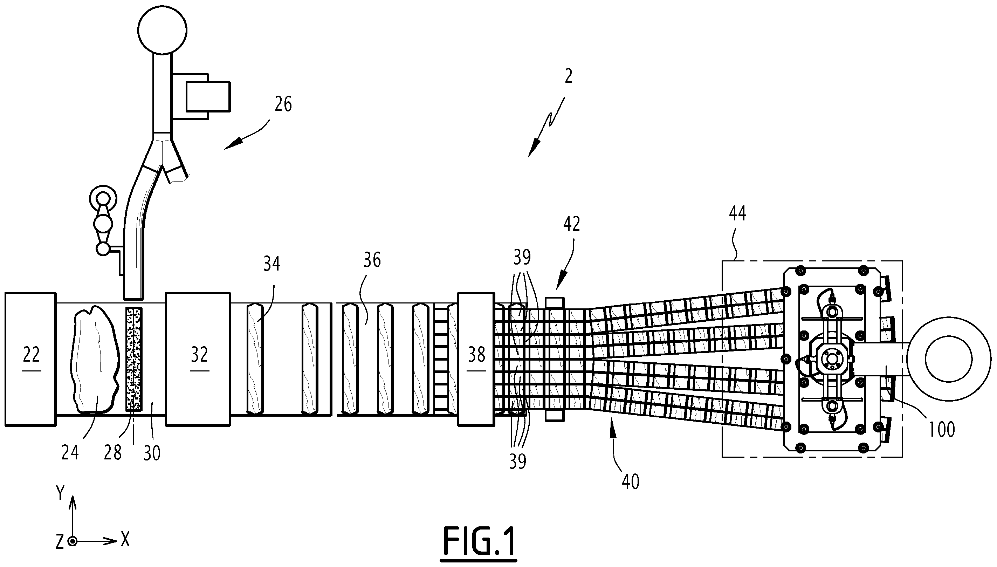

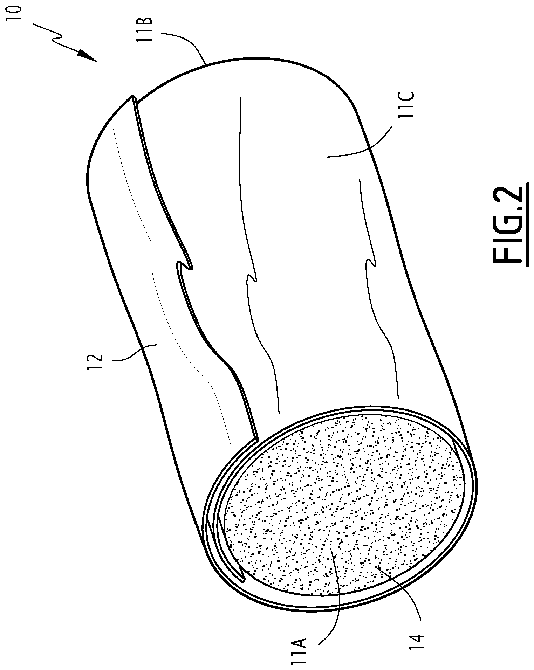

L'installation de production 2 visible sur la Figure 1 est destinée à la production de produits alimentaires tels que l'aliment fourré 10 représenté sur la Figure 2.

En référence à cette Figure 2, l'aliment fourré 10 est sensiblement cylindrique de révolution. Il présente deux bases 11A, 11B définissant chacune une extrémité axiale de l'aliment fourré 10, et une face latérale périphérique 11C reliant les bases 11A, 11B l'une à l'autre. Il a typiquement un diamètre compris entre 1 et 3 cm, et une longueur comprise entre 2 et 8 cm.

L'aliment fourré 10 comprend une enveloppe extérieure 12 en un premier matériau alimentaire, et un fourrage intérieur 14 en un deuxième matériau alimentaire.

L'enveloppe extérieure 12 est tubulaire. Elle définit la surface latérale périphérique 11C de l'aliment fourré 10. Elle ne couvre pas les extrémités axiales de l'aliment fourré 10. Vue depuis une extrémité axiale de l'aliment fourré 10, elle forme une spirale autour du fourrage intérieur 14.

Le premier matériau alimentaire est typiquement de la viande, notamment un produit de salaison, et de préférence du jambon. En variante, le premier matériau alimentaire est un produit végétal, par exemple une tranche de légume ou une feuille de purée de légume. Dans une autre variante, le premier matériau alimentaire est un produit fromager, par exemple un fromage à pâte pressée, un fromage retexturé ou un fromage à pâte filée. En variante encore, le premier matériau alimentaire est un produit de la mer, par exemple une tranche de poisson, une tranche de poisson fumé, un produit de salaison de poisson, une feuille d'algue, ou un produit à base d'algue, de poisson, de crustacé ou d'un mélange de ceux-ci.

Le fourrage intérieur 14 forme un cylindre plein. Il affleure aux extrémités axiales de l'aliment fourré 10.

Le deuxième matériau alimentaire qui compose ce fourrage 14 a un indice de pénétromètrie compris entre 80 et 300. Il est avantageusement un produit rhéofluidifiant ayant une consistance comprise entre 800 et 1200 Pa.s à 12°C, avec un indice de rhéofluidifiance compris entre 0,10 et 0,20.

Un exemple de deuxième matériau alimentaire présentant ces caractéristiques est lorsque le deuxième matériau alimentaire est un produit fromager constitué essentiellement de fromage, c'est-à-dire que le fromage constitue plus de 70% en poids du produit fromager. Ce fromage est typiquement un fromage à pâte molle selon la définition donnée par le CODEX STAN 283-1978, c'est-à-dire un fromage dont la teneur en eau du fromage dégraissé (TEFD) est supérieure à 67%, ladite TEFD se calculant comme suit : (Poids de l'eau dans le fromage) / (Poids total du fromage - Poids de la matière grasse dans le fromage).

Dans un mode de réalisation, le produit fromager comprend au moins un intrant mélangé au fromage, le ou chaque intrant étant choisi parmi : les aromates, les herbes, les fruits, les fruits à coques, les légumes, les épices, les arômes, les colorants.

Le deuxième matériau alimentaire a par ailleurs une densité comprise entre 0,9 et 1.

De retour à la Figure 1, l'installation 2 comprend un poste 22 de fourniture d'une feuille 24 du premier matériau alimentaire, un système 26 de fourniture d'un rouleau 28 du deuxième matériau alimentaire, et un tapis 30 d'entraînement de la feuille 24 et du rouleau 28. L'installation 20 comprend également un poste 32 d'enroulement de la feuille 24 autour du rouleau 28 pour former un grand roulé 34, et un tapis 36 d'entreposage de grands roulés 34. L'installation 20 comprend enfin un poste 38 de découpe de chaque grand roulé 34 en tronçons 39, un dispositif 40 d'entraînement et de séparation des tronçons 39, un système 42 d'élimination des tronçons 39 d'extrémité, et un poste 44 d'emballage des aliments fourrés 10.

Pour la description du poste de fourniture 22, du système de fourniture 26, du tapis d'entraînement 30, du poste d'enroulement 32, du tapis d'entreposage 36, du poste de découpe 38, du dispositif d'entraînement 40 et du système d'élimination 42, le lecteur est invité à se reporter à la description de ces éléments donnée par le document FR2996988A1.

Dans la suite, nous allons nous attacher à la description du seul poste d'emballage 44. Pour cette description, les termes d'orientation s'entendent par rapport au repère orthogonal direct défini ci-dessous, représenté sur les Figures, et dans lequel on distingue :
- un axe longitudinal X, orienté de l'amont vers l'aval de l'installation 20,
- un axe transversal Y, orienté de la droite vers la gauche de l'installation 20, et
- un axe vertical Z, orienté du bas vers le haut.

Le poste d'emballage 44 est disposé à l'extrémité aval de l'installation 20. Il comprend un dispositif de préhension 100 selon l'invention pour la saisie des produits alimentaires sur les courroies centrales du dispositif d'entraînement 40, et de dépose desdits produits alimentaires dans des barquettes (non représentées).

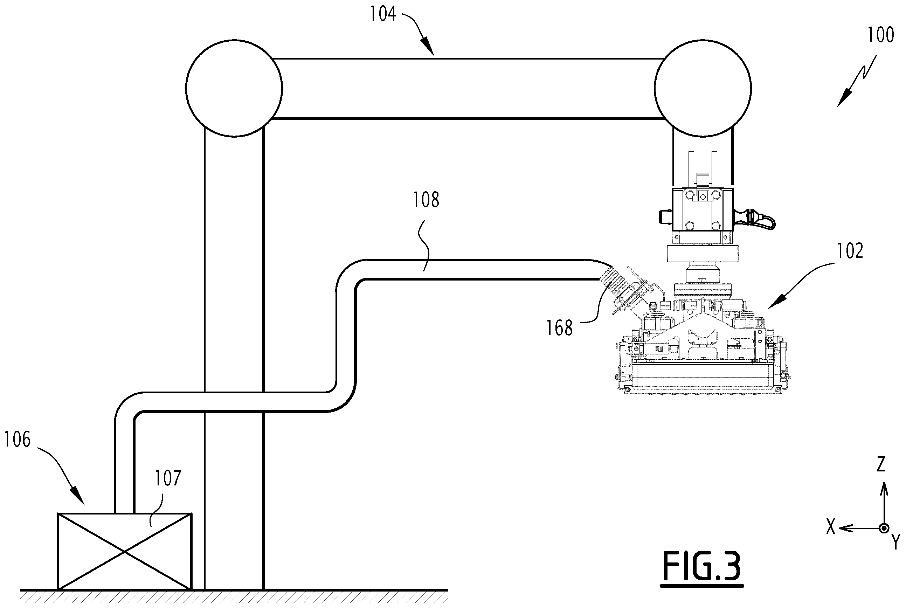

En référence à la Figure 3, le dispositif de préhension 100 comprend une tête de préhension 102 et un bras robotisé 104 pour le déplacement de la tête de préhension 102. Il comprend également un système 106 d'insufflation de gaz sous pression, typiquement de l'air sous pression, dans la tête de préhension 102.

Le système d'insufflation 106 comprend un système 107 de fourniture de gaz sous pression, typiquement un compresseur à air, et une conduite fluidique 108 reliant fluidiquement le système de fourniture 107 à la tête de préhension 102.

Le système de fourniture 107 est adapté pour fournir un gaz à une pression comprise entre 1 bar et 3 bars, par exemple comprise entre 1 bar et 2,5 bars, et de préférence sensiblement égale à 2 bar. La consommation en air comprimé ici est réduite par rapport à des solutions de soufflage connues de l'état de la technique. Il en découle une diminution du nombre de décibels générés par l'installation et une économie d'énergie conséquente.

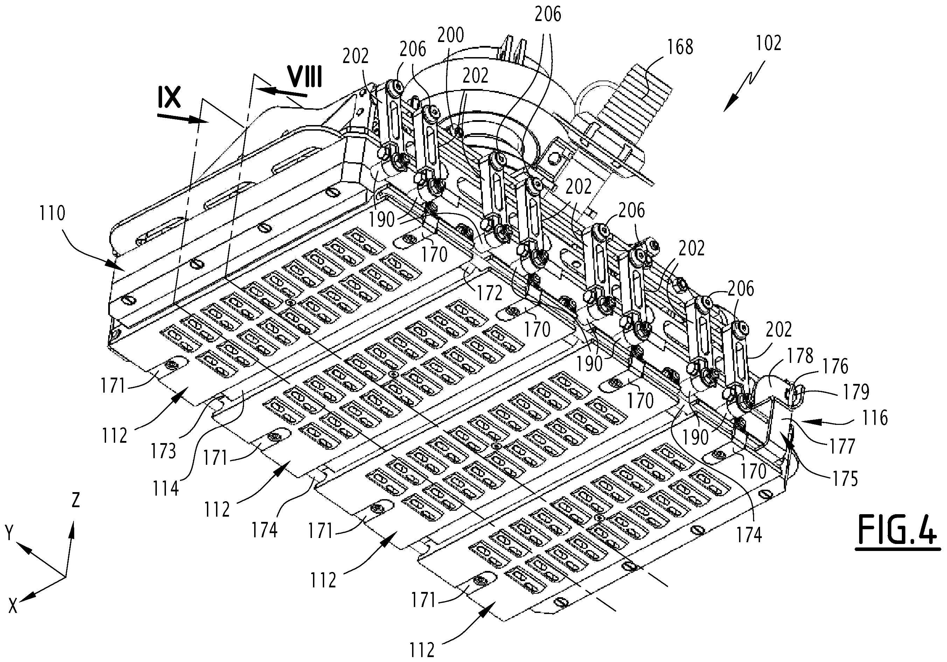

Comme visible sur la Figure 4, la tête de préhension 102 comprend un corps 110, une pluralité de plaques perforées 112 plaquées contre une paroi inférieure 114 du corps 110, et un système 116 de fixation des plaques 112 au corps 110.

Le corps 110 présente une forme générale parallélépipédique. Il est allongé suivant la direction transversale Y.

Le corps 110 est typiquement constitué de polyéthylène haute densité (PEHD). Grâce à l'emploi de ce matériau, une longue durée de vie du corps 110 est garantie, car le PEHD résiste très bien dans les environnements frais, typiquement de température inférieure à 8°C, et aux produits nettoyants agressifs utilisés dans l'agroalimentaire. Ainsi les pièces ne se déforment pas, notamment lors du nettoyage. En outre, le PEHD est léger, notamment plus léger que les aciers inoxydables, ce qui permet d'utiliser pour le bras robotisé 104 un bras robotisé relativement peu puissant, donc peu cher et économe en énergie.

Les plaques perforées 112 sont juxtaposées les unes aux autres suivant la direction transversale Y, chacune étant allongée suivant la direction longitudinale X. Dans l'exemple représenté, elles sont au nombre de quatre.

Chaque plaque perforée 112 est réalisée en un matériau compatible avec les produits alimentaires, typiquement en PEHD. Ainsi, les plaques perforées ne se déforment pas lors du lavage en ligne.

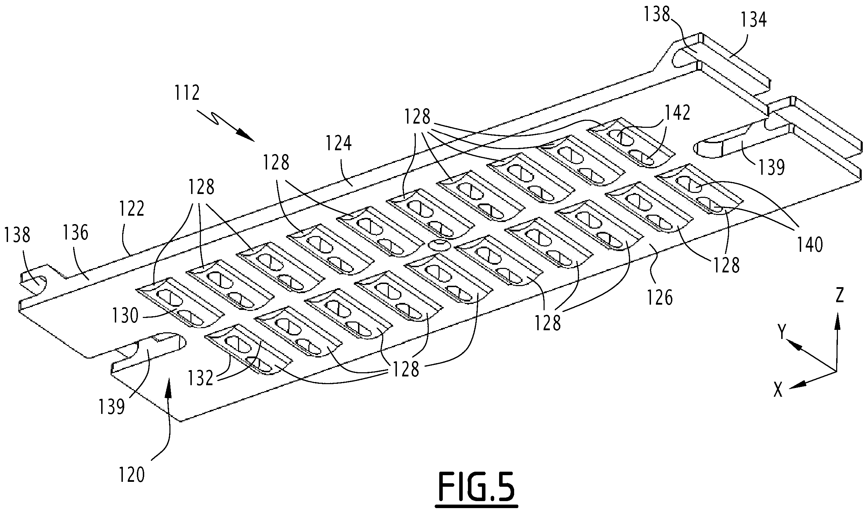

En référence à la Figure 5, chaque plaque perforée 112 présente une grande face inférieure 120, orientée à l'opposé du corps 110, une grande face supérieure 122 en appui contre le corps 110, et un bord périphérique 124 faisant la jonction entre la grande face inférieure 120 et la grande face supérieure 122.

La grande face inférieure 120 présente un socle 126 sensiblement plat et une pluralité de bossages 128 faisant saillie vers le bas, à l'opposé de la grande face supérieure 122, par rapport au socle 126.

Les bossages 128 sont disposés selon un quadrillage de lignes et de colonnes ; en d'autres termes, chaque bossage 128 est aligné selon une première direction avec au moins un autre bossage 128 d'une même colonne et selon une deuxième direction avec au moins un autre bossage 128 d'une même ligne. Les colonnes sont ici longitudinales et les lignes sont transversales. Dans l'exemple représenté, les colonnes sont au nombre de deux et les lignes sont au nombre de dix.

Chaque bossage 128 définit une surface de réception 130 d'un produit alimentaire, propre à la réception d'un unique produit alimentaire à la fois. Cette surface de réception 130 est convexe. En particulier, la surface de réception 130 est allongée suivant la direction transversale Y et a la forme d'une portion de cylindre de révolution orientée transversalement et présentant avantageusement, comme représenté, deux bords parallèles opposés 132 affleurant le socle 126.

Le fait que la surface de réception 130 soit convexe réduit la zone de contact entre cette surface 130 et le produit alimentaire. Les phénomènes de collage entrainant la déstructuration voire le déroulement du produit alimentaire sont ainsi considérablement réduits. En outre, cette faible zone de contact évite que le produit alimentaire ne soit déformé, et limite les risques de contamination du produit alimentaire par la surface de réception 130.

Le bord 124 présente deux faces d'extrémité 134, dont une seule est visible sur la Figure 5, disposées aux extrémités longitudinales de la plaque perforée 112, et deux faces latérales 136, dont une seule est visible sur la Figure 5, définissant les extrémités latérales de la plaque perforée 112.

Chaque face d'extrémité 134 définit une fente 138, horizontale, débouchant dans chacune des faces latérales 136. Par ailleurs, une encoche 139 est ménagée dans chaque face d'extrémité 134, sensiblement au milieu de ladite face d'extrémité 134, l'encoche 139 ayant une profondeur supérieure à la fente 138 et débouchant dans les faces inférieure 120 et supérieure 122.

La profondeur de chacune des fentes 138 et encoches 139 est définie comme étant la distance du fond de ladite fente 138 ou encoche 139 à la face d'extrémité 134 dans laquelle elle est ménagée.

Chaque plaque perforée 112 présente également une pluralité d'orifices traversants 140 débouchant chacun dans la face supérieure 122 et dans la face inférieure 120, plus particulièrement dans l'une des surfaces de réception 130.

Pour chaque surface de réception 130, la plaque perforée 112 présente deux orifices traversants 140 débouchant dans ladite surface de réception 130. Ces deux orifices traversants 140 débouchent chacun à travers une ouverture 142 respective ménagée dans la surface de réception 130.

Les ouvertures 142 de ces deux orifices 140 présentent chacune une forme oblongue allongée suivant la direction transversale Y. Elles sont décalées transversalement l'une par rapport à l'autre, en particulier de manière à ce qu'il n'existe aucun chevauchement longitudinal entre ces ouvertures 142. Elles sont également décalées longitudinalement l'une par rapport à l'autre, ce décalage étant toutefois faible, de sorte qu'il existe un chevauchement transversal entre les ouvertures 142.

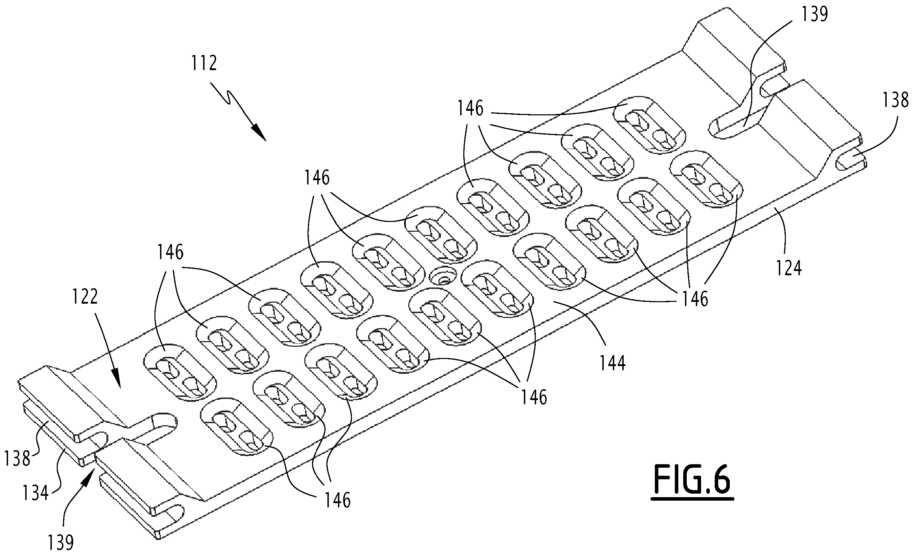

En référence à la Figure 6, la face supérieure 122 présente une surface de base 144, sensiblement plane, et une pluralité de dépressions 146, chacune en creux par rapport à la surface de base 144.

La surface de base 144 est en contact avec la face extérieure 150 de la paroi inférieure 114 du corps 110.

Chaque dépression 146 est disposée au droit d'un bossage 128 correspondant, et les orifices 140 qui débouchent dans ce bossage 128 débouchent, côté face supérieure 122, dans ladite dépression 146. Les dépressions 146 sont ainsi, de même que les bossages 128, disposées en quadrillage de lignes et de colonnes.

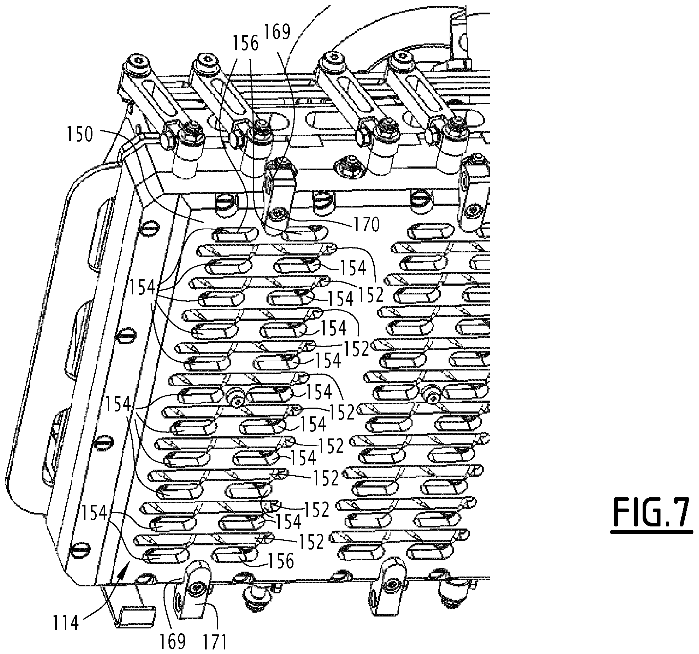

En référence à la Figure 7, la paroi inférieure 114 du corps 110 présente une face extérieure 150, contre laquelle les plaques perforées 112 sont en appui, et une face intérieure (non représentée). La face extérieure 150 est sensiblement plane.

La paroi inférieure 114 présente par ailleurs une pluralité de fenêtres 152, 154. Ces fenêtres 152, 154 sont en particulier oblongues, leur direction d'élongation se confondant sensiblement avec la direction transversale Y. Elles comprennent des premières fenêtres 152, traversantes, débouchant dans la face extérieure 150 et dans la face intérieure, et des deuxièmes fenêtres 154.

Les premières fenêtres 152 sont sensiblement identiques les unes aux autres, et les deuxièmes fenêtres 154 sont sensiblement identiques les unes aux autres.

Les premières fenêtres 152, respectivement les deuxièmes fenêtres 154, sont disposées selon un quadrillage de lignes et de colonnes. En d'autres termes, chaque première fenêtre 152, respectivement chaque deuxième fenêtre 154, est alignée selon une première direction avec au moins une autre première fenêtre 152, respectivement une autre deuxième fenêtre 154, d'une même colonne, et selon une deuxième direction avec au moins une autre première fenêtre 152, respectivement une autre deuxième fenêtre 154, d'une même ligne. Les colonnes sont ici longitudinales et les lignes sont transversales.

Les premières et les deuxièmes fenêtres 152, 154 sont disposées en alternance les unes avec les autres suivant la direction longitudinale X. Ainsi, pour chaque paire de deuxièmes fenêtres 154 disposées successivement suivant la direction longitudinale X, il existe une première fenêtre 152 interposée longitudinalement entre lesdites deux deuxièmes fenêtres 154.

En particulier, chaque première fenêtre 152 a une longueur transversale supérieure au double de la longueur transversale des deuxièmes fenêtres 154, et le nombre de colonnes de premières fenêtres 152 est égal à la moitié du nombre de colonnes de deuxièmes fenêtres 154, le milieu de chaque colonne de premières fenêtres 152 étant à équidistance de deux colonnes de deuxièmes fenêtres 154 associées. De ce fait, chaque première fenêtre 152 appartenant à une colonne de premières fenêtres 152 est interposée entre deux deuxièmes fenêtres 154 appartenant à une première colonne associée à ladite colonne de premières fenêtres 152, et est également interposée entre deux deuxièmes fenêtres 154 appartenant à une deuxième colonne associée à ladite colonne de premières fenêtres 152.

Chaque première fenêtre 152 s'étend en regard d'au moins une dépression 146 associée parmi les dépressions 146 formées dans les faces supérieures 122 des plaques 112, et chaque dépression 146 formée dans la face supérieure 122 de l'une des plaques 112 est associée à l'une desdites premières fenêtres 152, c'est-à-dire disposée en regard de ladite première fenêtre 152. En particulier, pour chaque première fenêtre 152, les dépressions 146 associées à ladite première fenêtre 152 sont constituées, comme représenté, par des dépressions 146 appartenant toutes à une même plaque 112 et alignées suivant une même ligne transversale, et toutes les dépressions 146 appartenant à une même plaque 112 et alignées suivant une même ligne transversale sont associées à une même première fenêtre 152.

Chaque orifice traversant 140 est ainsi disposé en regard de l'une desdites premières fenêtres traversantes 152.

Chaque deuxième fenêtre 154, à l'exception de deuxièmes fenêtres d'extrémité 156, c'est-à-dire disposées aux extrémités longitudinales d'une colonne, est quant à elle disposée à cheval sur deux dépressions 146 associées parmi les dépressions 146 formées dans les faces supérieures 122 des plaques 112, c'est-à-dire qu'elle s'étend en partie en regard de chacune desdites dépressions 146 associées. Ces dépressions 146 associées à une même deuxième fenêtre 154 sont juxtaposées l'une à l'autre suivant la direction longitudinale X.

Par ailleurs, chaque dépression 146 formée dans la face supérieure 122 de l'une des plaques 112 est associée à deux desdites deuxièmes fenêtres 154, c'est-à-dire que, pour chaque dépression 146, il existe deux deuxièmes fenêtres 154 s'étendant chacune en partie en regard de ladite dépression 146.

S'agissant des deuxièmes fenêtres d'extrémité 156, chacune s'étend en partie en regard d'une unique dépression 146 associée.

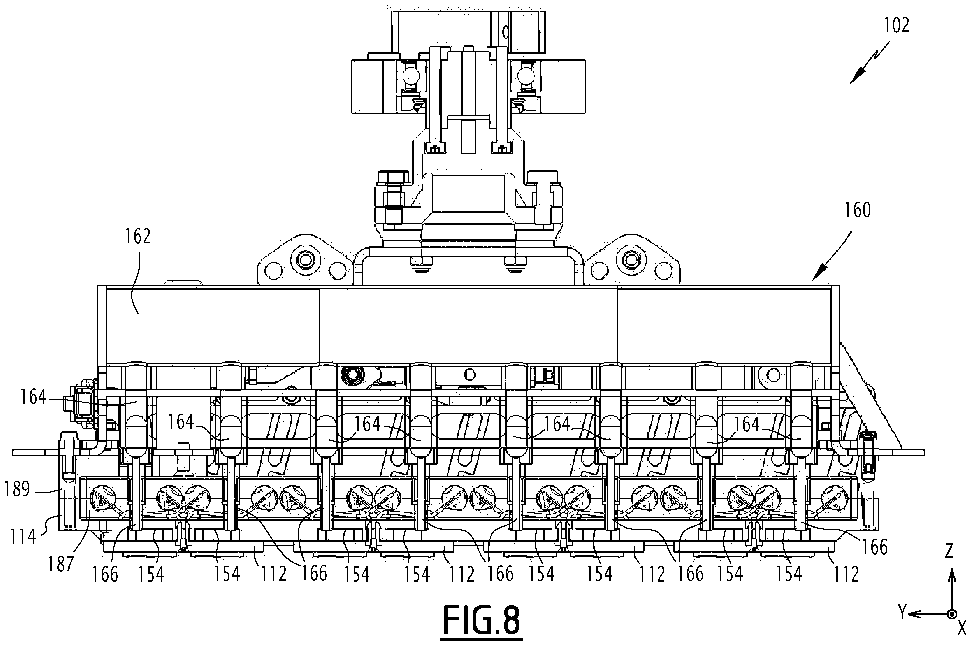

En référence à la Figure 8, le corps 110 de la tête de préhension 102 comprend, outre la paroi inférieure 114, un système de guidage 160 pour guider jusqu'aux orifices traversants 140 le gaz insufflé par le système d'insufflation 106. Ce système de guidage 160 forme ainsi, avec le système d'insufflation 106, un système de soufflage apte à souffler du gaz à travers chaque surface de réception 130, et notamment à travers chaque orifice traversant 140.

Ce système de guidage 160 comprend un canal principal de distribution 162, une pluralité de canaux secondaires de distribution 164, et une pluralité de buses de soufflage 166. Le système de guidage 160 comprend également un raccord 168, visible sur la Figure 4, pour le raccordement fluidique du canal principal de distribution 162 au système d'insufflation 106, en particulier à la conduite fluidique 108.

Le canal principal 162 est constitué par un tube rectiligne fermé à ses extrémités. Il est orienté transversalement, c'est-à-dire que son axe est sensiblement confondu avec la direction transversale Y. Il s'étend sur sensiblement toute la largeur transversale de la tête 102 et est disposé sensiblement à équidistance des extrémités longitudinales de la tête 102.

Chaque canal secondaire 164 est raccordé fluidiquement au canal principal 162.

Chaque canal secondaire 164 est constitué par un tube rectiligne fermé à ses extrémités. Il est orienté longitudinalement, c'est-à-dire que son axe est sensiblement confondu avec la direction longitudinale X, et s'étend sur sensiblement toute la longueur longitudinale de la tête 102.

Chaque canal secondaire 164 est propre à alimenter en gaz sous pression toutes les deuxièmes fenêtres 154 d'une même colonne. A cet effet, le nombre de canaux secondaires 164 est égal au nombre de colonnes de deuxièmes fenêtres 154.

Chaque buse 166 s'étend depuis l'un des canaux secondaires 164 et débouche dans une deuxième fenêtre 154 respective. De plus, le nombre de buses 166 est égal au nombre de deuxièmes fenêtres 154, de manière à assurer l'alimentation en gaz sous pression de chaque deuxième fenêtre 154.

Ainsi, pour chaque surface de réception 130, deux buses 166 débouchent à proximité des orifices traversants 140 débouchant dans ladite surface de réception 130, lesdites buses 166 encadrant longitudinalement la surface de réception 130. De plus, en débouchant dans une deuxième fenêtre 154, chaque buse 166, à l'exception des buses 166 débouchant dans les deuxièmes fenêtres d'extrémité 156, débouche sensiblement à équidistance des orifices traversants 140 débouchant dans une première dépression 146 associée à ladite deuxième fenêtre 154, et donc également dans une première surface de réception 130, et des orifices traversants 140 débouchant dans la deuxième dépression 146 associée à la deuxième fenêtre 154, et donc également dans une deuxième surface de réception 130.

Chaque buse 166 présente de préférence un diamètre inférieur à 5 mm. Ainsi, en dépit de la pression relativement faible fournie par le système de fourniture 107, la pression apportée au niveau des orifices traversants 140 débouchant dans chaque surface de réception 130 est suffisante pour assurer un décollement du produit alimentaire reçu sur ladite surface de réception 130.

De retour à la Figure 4, le corps 110 comprend encore des nervures 170, 171 de positionnement des plaques 112. Chaque nervure 170, 171 fait saillie vers le bas par rapport à la face extérieure 150 de la paroi inférieure 114 et est logée dans une encoche 139 correspondante de l'une des plaques 112.

Chaque nervure 170, 171 est en particulier allongée suivant la direction longitudinale X.

Les nervures de positionnement 170, 171 comprennent des nervures arrière 170, disposées le long d'un bord arrière 172 de la paroi 114, et des nervures avant 171, disposées le long d'un bord avant 173 de la paroi 114. Les nervures arrière 170 et avant 171 sont en nombres égaux, chaque nervure arrière 170 étant sensiblement alignée longitudinalement avec une nervure avant 171 correspondante.

Chaque nervure de positionnement 170, 171 présente par ailleurs une ouverture traversante 169 (Figure 7) débouchant dans les deux faces latérales de la nervure 170, 171, ladite ouverture traversante 169 étant disposée dans le prolongement de la fente 138 ménagée dans la même face d'extrémité 134 que celle dans laquelle est ménagée l'encoche 139 dans laquelle la nervure 170, 171 est logée. Les ouvertures traversantes 169 ménagées dans les nervures arrière 170, respectivement avant 171, sont alignées les unes avec les autres, de manière à former un passage transversal.

Le système 116 de fixation des plaques 112 comprend deux tiges 174, des languettes 175 de retenue des tiges 174, et des accroches 176 pour les languettes 175.

Chaque tige 174 est rectiligne et est orientée transversalement, c'est-à-dire que son axe est sensiblement confondu avec la direction transversale Y. Chaque tige 174 est engagée dans le passage transversal défini par les ouvertures traversantes 169 ménagées dans les nervures de positionnement 170, 171 ; chaque tige 174 est, de ce fait, également engagée dans l'une des fentes 138 de chaque plaque 112, et empêche ainsi le retrait des plaques 112.

Chaque languette 175 est venue de matière avec une tige 174 respective. Elle comprend, en partant de la tige 174, un premier tronçon 177 en U, un deuxième tronçon plan 178 en arc de cercle, et un troisième tronçon 179 en saillie relativement au deuxième tronçon 178.

L'accroche 176 est quant à elle formée par une fermeture à levier dont l'anneau engage le troisième tronçon 179 de la languette 175 lorsque la fermeture à levier est en position verrouillée, empêchant ainsi le déplacement de la tige 174 selon la direction transversale.

Grâce au système de fixation 116, il est ainsi particulièrement aisé de fixer les plaques 112 au corps 110, ainsi que de les en retirer.

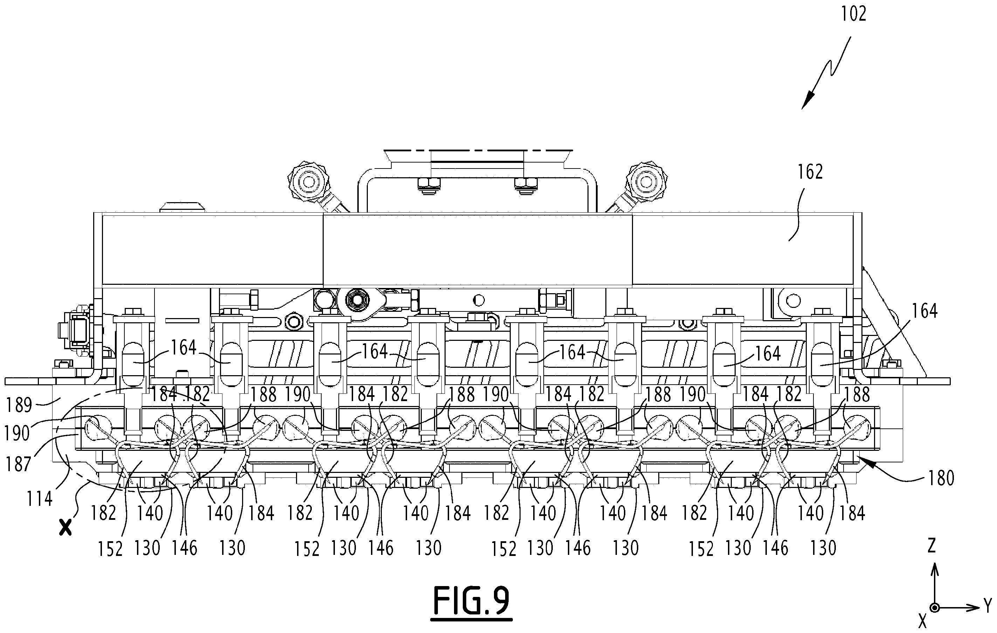

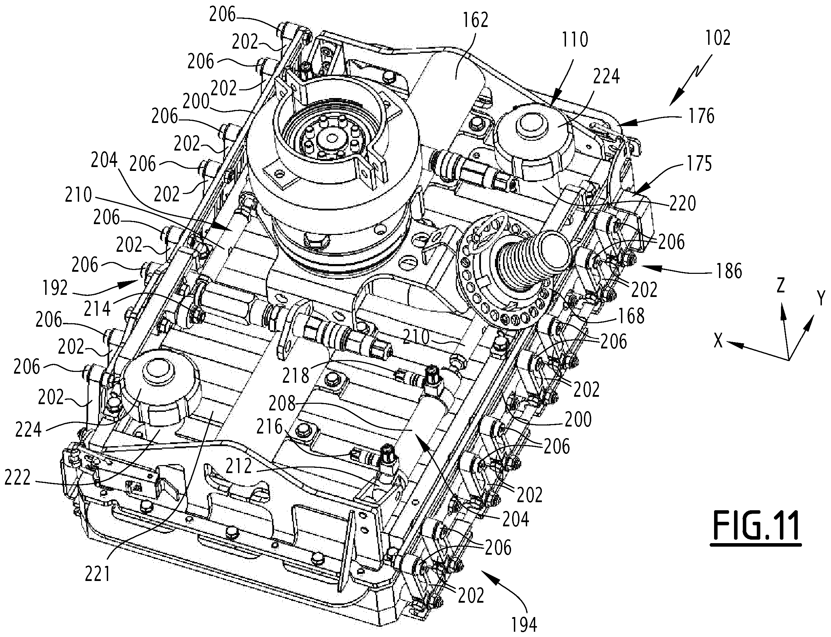

En référence à la Figure 9, la tête de préhension 102 comprend également un système 180 de saisie des produits alimentaires. Ce système de saisie 180 comprend des aiguilles 182, 184 destinées à piquer les produits alimentaires, et un système 186 (Figure 11) de déplacement des aiguilles 182, 184 entre une position de piquage des produits alimentaires et une position de libération des produits alimentaires.

Chaque aiguille 182, 184 est réalisée en un matériau compatible avec les produits alimentaires, typiquement en acier inoxydable.

Les aiguilles 182, 184 sont en nombre pair, lesdites aiguilles 182, 184 étant réparties en paires associées chacune à une surface de réception 130 respective.

Chaque aiguille d'une paire, respectivement 182, 184, est solidaire d'un axe de rotation, respectivement 188, 190, monté rotatif autour de son axe relativement au corps 110. Chaque aiguille, respectivement 182, 184, est ainsi montée rotative autour de son axe de rotation, respectivement 188, 190, entre une position rétractée, dans laquelle elle ne traverse pas la surface de réception 130 à laquelle est associée la paire, et une position déployée, dans laquelle l'aiguille 182, 184 traverse ladite surface de réception 130. En particulier, lorsque ladite aiguille 182, 184 est en position déployée, elle s'étend à travers un orifice traversant 140 respectif parmi les orifices traversants 140 débouchant dans ladite surface de réception 130.

La position rétractée constitue à la position de libération des produits alimentaires, et la position déployée constitue la position de piquage des produits alimentaires.

Ces aiguilles 182, 184 et ces axes 188, 190 sont tous montés à l'intérieur d'une cavité 187 commune ménagée à l'intérieur du corps 110 et définie entre, d'une part, la paroi inférieure 114 et, d'autre part, une paroi supérieure 189.

Les axes de rotation 188, 190 de toutes les aiguilles 182, 184 sont longitudinaux. Ainsi, au sein d'une même paire, les axes de rotation des deux aiguilles 182, 184 constituant ladite paire sont parallèles l'un à l'autre.

Chaque aiguille, respectivement 182, 184, est en forme d'arc de cercle centré sur son axe de rotation, respectivement 188, 190. Ainsi, la pénétration et le retrait de l'aiguille 182, 184 dans le produit alimentaire se font suivant le même chemin, ce qui évite d'endommager le produit alimentaire, en particulier en surface.

En outre, chaque aiguille 182, 184 présente un diamètre inférieur ou égal à 2 mm, de manière à limiter l'empreinte laissée par l'aiguille 182, 184 dans le produit alimentaire du fait de sa pénétration.

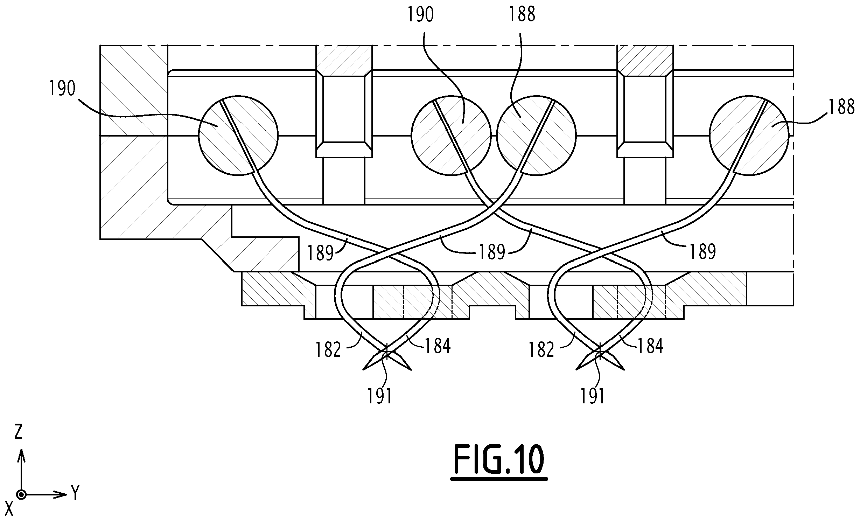

Lorsqu'elles sont déployées, les aiguilles 182, 184 d'une même paire se croisent, comme visible sur la Figure 10 ; en d'autres termes, il existe une droite 191 sensiblement parallèle aux axes de rotation 188, 190 des aiguilles 182, 184 d'une même paire telle que, lorsque lesdites aiguilles 182, 184 sont en position déployée, cette droite 191 passe par lesdites aiguilles 182, 184. Ces aiguilles 182, 184 sont en revanche décroisées lorsqu'elles sont rétractées, comme visible sur la Figure 9.

A cet effet, chaque paire comprend une première aiguille 182 et une deuxième aiguille 184 dont l'une est le symétrique de l'autre relativement à un plan de symétrie longitudinal (non représenté), lesdites aiguilles 182, 184 ayant en outre des mouvements symétriques relativement audit plan longitudinal. Ainsi, le sens de rotation de la première aiguille 182 depuis sa position rétractée vers sa position déployée est inverse du sens de rotation de la deuxième aiguille 184 depuis sa position rétractée vers sa position déployée, et vice-versa.

En particulier, chaque première aiguille 182 de chaque paire est adaptée pour tourner dans un premier sens depuis sa position rétractée vers sa position déployée, ce premier sens étant le même pour toutes les premières aiguilles 182, et chaque deuxième aiguille 184 de chaque paire est adaptée pour tourner dans un deuxième sens depuis sa position rétractée vers sa position déployée, ce deuxième sens étant le même pour toutes les deuxièmes aiguilles 184.

Dans l'exemple représenté, chaque aiguille 182, 184 est reliée à son axe de rotation 188, 190 respectif par l'intermédiaire d'une tige coudée 189. Cette tige coudée 189 présente typiquement un diamètre sensiblement égal au diamètre de l'aiguille 182, 184 et est de préférence venue de matière avec l'aiguille 182, 184.

En référence à la Figure 11, le système de déplacement 186 comprend un premier dispositif 192 d'entraînement des premières aiguilles 182, et un deuxième dispositif 194 d'entraînement des deuxièmes aiguilles 184. Le premier dispositif d'entraînement 192 est le symétrique du deuxième dispositif d'entraînement 194 relativement à un axe de symétrie vertical (non représenté) sensiblement centré sur le corps 110 ; aussi, afin de simplifier la description, seul le deuxième dispositif d'entraînement 194 sera décrit dans la suite, les références données s'appliquant également au premier dispositif d'entraînement 192.

Ce deuxième dispositif d'entraînement 194 comprend un bras 200 horizontal, une pluralité de biellettes 202 reliant chacune mécaniquement un deuxième axe de rotation 190 respectif au bras 200, et un vérin 204 articulé au corps 110 de la tête 102 et au bras 200.

Le bras 200 est allongé suivant la direction transversale Y. Il est adapté pour se déplacer en translation à l'intérieur d'un plan transversal.

Chaque biellette 202 est solidaire d'un deuxième axe de rotation 190 respectif, tout en étant liée au bras 200 par une liaison pivot 206 à axe longitudinal. La distance de la liaison pivot 206 au deuxième axe de rotation respectif 190 est la même pour toutes les biellettes 202. De ce fait, le bras 200 est forcé à conserver une orientation horizontale.

Le vérin 204 est orienté transversalement. Il comprend un cylindre 208 et un piston 210. Le cylindre 208 est lié au corps 110 par une première liaison pivot 212 à axe longitudinal. Le piston 210 est quant à lui lié au bras 200 par une deuxième liaison pivot 214 à axe longitudinal.

De préférence, les liaisons pivot 206, 210, 214 sont adaptées pour tolérer des mouvements autres que la seule rotation autour de l'axe du pivot, tant que lesdits autres mouvements sont de faible amplitude, ceci afin de pouvoir accommoder les tolérances de fabrication.

Le vérin 204 est de préférence, comme représenté, un vérin pneumatique. A cet effet, le vérin 204 présente une première entrée 216 d'air comprimé, pour le déploiement du piston 210 hors du cylindre 208, et une deuxième entrée 218 d'air comprimé, pour la rétractation du piston 210 à l'intérieur du cylindre 208. Lesdites entrées 216, 218 sont raccordées fluidiquement à un système d'alimentation en air comprimé (non représenté).

Ainsi, lorsque le vérin 204 se déploie, cela entraîne le déplacement du bras 200 selon la direction transversale Y, dans un premier sens. Du fait de ses liaisons 206 avec les biellettes 202, le déplacement du bras 200 entraîne la rotation des biellettes 202 autour des deuxièmes axes de rotation 190, lesdites biellettes 202 entraînant simultanément la rotation desdits deuxièmes axes de rotation 190 autour de leurs axes, dans le deuxième sens, et donc le déplacement des deuxièmes aiguilles 184 depuis leur position rétractée vers leur position déployée. Les liaisons pivot 206 du bras 200 avec les biellettes 202 forcent le déplacement du bras 200 vers le haut puis vers le bas en même temps qu'il se déplace suivant la direction transversale Y ; ce déplacement est toléré par le vérin 204 grâce aux liaisons pivot 212, 214.

Lorsque, au contraire, le vérin 204 se rétracte, cela entraîne le déplacement du bras 200 selon la direction transversale Y, dans un deuxième sens opposé au premier sens. Du fait de ses liaisons 206 avec les biellettes 202, le déplacement du bras 200 entraîne la rotation des biellettes 202 autour des deuxièmes axes de rotation 190, lesdites biellettes 202 entraînant simultanément la rotation desdits deuxièmes axes de rotation 190 autour de leurs axes, dans le premier sens, et donc le déplacement des deuxièmes aiguilles 184 depuis leur position déployée vers leur position rétractée. A nouveau, les liaisons pivot 206 du bras 200 avec les biellettes 202 forcent le déplacement du bras 200 vers le haut puis vers le bas en même temps qu'il se déplace suivant la direction transversale Y, ce déplacement étant toujours toléré par le vérin 204 grâce aux liaisons pivot 212, 214.

Le premier dispositif d'entraînement 192 étant le symétrique du deuxième dispositif d'entraînement relativement à un axe de symétrie vertical, le déploiement de son vérin 204 entraîne la rotation des premiers axes de rotation 198 non pas dans le deuxième sens, mais dans le premier sens, permettant là aussi le déploiement des premières aiguilles 182, et la rétractation dudit vérin 204 entraîne la rotation des premiers axes de rotation 198 non pas dans le premier sens, mais dans le deuxième sens, permettant là aussi la rétractation des premières aiguilles 182.

La tête de préhension 102 comprend encore un circuit de nettoyage pour la circulation d'un fluide de nettoyage à l'intérieur de la tête préhension 102, ledit circuit de nettoyage étant adapté pour que, sans démontage du corps 110, le fluide de nettoyage puisse circuler dans toutes les cavités à l'intérieur du corps 110 et assurer ainsi un nettoyage satisfaisant du corps 110.

Ce circuit de nettoyage comprend le système de guidage 160. En effet, en amenant un fluide de nettoyage par le raccord 168, le fluide de nettoyage peut aisément circuler dans tout le système de guidage 160 et ressortir par les deuxièmes fenêtres 154, les nettoyant par la même occasion.

Le circuit de nettoyage comprend également une conduite d'entrée 220 pour l'alimentation en fluide de nettoyage d'autres parties du corps 110 que le seul système de guidage 160. Cette conduite 220 débouche par un orifice extérieur, non visible sur les Figures, à l'extérieur du corps 110, en particulier dans une face supérieure 221 du corps 110, et par un orifice intérieur, non représenté, à l'intérieur de la cavité 187 ; ainsi, lorsque du fluide de nettoyage est amené par la conduite d'entrée 220 celui-ci se répand dans la cavité 187, nettoyant l'intérieur de cette cavité 187, et notamment les aiguilles 182, 184 disposées à l'intérieur de cette cavité 187. Le fluide peut ensuite s'évacuer par les premières fenêtres 152, les nettoyant au passage.

De préférence, le circuit de nettoyage comprend également, comme représenté, une conduite de sortie 222 pour l'évacuation du fluide de nettoyage hors desdites autres parties du corps 110. De même que la conduite 220, cette conduite 222 débouche par un orifice extérieur, non visible sur les Figures, à l'extérieur du corps 110, en particulier dans la face supérieure 221 du corps 110, et par un orifice intérieur, non représenté, à l'intérieur de la cavité 187 ; ainsi, l'éventuel trop-plein de produit de nettoyage dans la cavité 187 peut ressortir par la conduite de sortie 222.

Le circuit de nettoyage comprend encore des bouchons 224 pour obturer les orifices des conduites 220, 222 en fonctionnement normal de la tête de préhension 102. Ces bouchons 224 sont adaptés pour être ôtés lors du nettoyage de la tête de préhension 102.

Un procédé de production de produits alimentaires déformables au moyen de l'installation 2 va maintenant être décrit, en référence aux Figures 2 à 11.

Le procédé comprend tout d'abord une étape de fourniture d'une feuille 24 du premier matériau alimentaire au moyen du poste de fourniture 22 et d'un rouleau 28 du deuxième matériau alimentaire au moyen du système de fourniture 26. Cette étape de fourniture est suivie d'une étape d'enroulement de la feuille 24 autour du rouleau 28 au moyen du poste d'enroulement 32, puis d'une étape, réalisée au moyen du poste de découpe 38, de découpe du rouleau 28 et de la feuille 24 enroulée autour en tronçons 39, dont des tronçons 39 centraux formant les produits alimentaires déformables. Cette étape de découpe est encore suivie d'une étape d'entraînement des produits alimentaires par le dispositif d'entraînement et de séparation 40, puis d'une étape de déplacement des produits alimentaires au moyen du dispositif de préhension 100.

Pour les étapes de fourniture, d'enroulement, de découpe et d'entraînement, le lecteur est invité à se reporter à la description de ces étapes donnée par le document FR2996988A1.

Lors de l'étape de déplacement, les produits alimentaires sont déplacés depuis les courroies du dispositif d'entraînement et de séparation 40 jusque dans des barquettes (non représentées) présentant avantageusement un fond alvéolé en vue de leur conditionnement. A cet effet, l'étape de déplacement comprend les sous-étapes successives suivantes.

Tout d'abord, lors d'une première sous-étape de déplacement de la tête 102, le bras robotisé 104 amène la tête 102 en position de préhension, de sorte qu'au moins une partie des surfaces de réception 130 définies par les plaques perforées 112 soit disposée au-dessus des produits alimentaires portés par les courroies du dispositif d'entraînement et de séparation 40, à une faible distance de ces derniers, par exemple en les affleurant. Avantageusement, chacune desdites surfaces de réception 130 est disposée au-dessus d'un produit alimentaire respectif après le déplacement de la tête 102 par le bras 104.

Ensuite, lors d'une sous-étape de saisie, le vérin 204 de chacun des premier et deuxième dispositifs d'entraînement 192, 194 est déployé. Ce faisant, comme décrit plus haut, les première et deuxième aiguilles 182, 184 de chaque paire se déploient ; lorsque la surface de réception 130 à laquelle est associée cette paire est disposée au-dessus d'un produit alimentaire, les aiguilles 182, 184 pénètrent ainsi dans ledit produit alimentaire et viennent remonter ce produit alimentaire vers la surface de réception 130.

Puis, lors d'une deuxième sous-étape de déplacement de la tête 102, le bras robotisé 104 écarte la tête 102 du dispositif d'entraînement et de séparation 40 et emmène la tête 102 au-dessus des barquettes de conditionnement des produits alimentaires. Les produits alimentaires retenus par les aiguilles 182, 184 déployées sont ainsi déplacés simultanément.

Enfin, lors d'une étape de libération des produits alimentaires, le vérin 204 de chacun des premier et deuxième dispositifs d'entraînement 192, 194 est rétracté. Ce faisant, comme décrit plus haut, les première et deuxième aiguilles 182, 184 de chaque paire se rétractent, libérant ainsi l'éventuel produit alimentaire retenu par lesdites aiguilles 182, 184. Dans le même temps, du gaz sous pression, en particulier de l'air sous pression, est soufflé à travers les orifices traversants 140 au moyen du système de soufflage, de manière à décoller les produits alimentaires qui auraient pu coller à leur surface de réception 130. Simultanément, la tête 102 effectue un rapide mouvement de translation horizontal de manière à mettre les produits alimentaires en butée contre les parois des alvéoles des barquettes de conditionnement et provoquer ainsi un effort de cisaillement à l'interface entre les produits alimentaires et leurs surfaces de réception 130 respectives qui contribue au décollement des éventuels produits alimentaires collés. Les produits alimentaires ainsi libérés, et le cas échéant décollés, sont alors déposés dans les barquettes, où ils vont pouvoir être conditionnés.

Ainsi, grâce à l'invention décrite ci-dessus, il est possible de saisir et déplacer des produits alimentaires déformables en dégradant très peu les produits saisis. En effet, la méthode de saisie des produits alimentaires évite de déformer ou d'aplatir ces produits, en dépit de leur fragilité, et évite le déroulement du premier produit alimentaire.

Par ailleurs, l'invention ne nécessitant pas d'aspiration, elle limite l'encrassement du dispositif de préhension 100 utilisé à cet effet, et donc la contamination des produits alimentaires entre eux, ainsi que le nombre d'interventions de nettoyage de la tête de préhension 102. En se passant d'aspiration, l'invention limite également le niveau de bruit causé par l'utilisation du dispositif de préhension 100.

Il est en outre particulièrement aisé d'assurer la maintenance dudit dispositif de préhension 100, notamment le démontage et le nettoyage de la tête de préhension 102 de ce dispositif 100.

Enfin, l'invention permet une préhension efficace des produits alimentaires même en cas de variabilité importante de ces produits alimentaires en termes de dimensions, de formes et/ou de grammage, et même lorsque les produits alimentaires présentés à la préhension sont en nombre insuffisant par rapport à la capacité de préhension du dispositif 100.

Il résulte de tous ces avantages une réduction du nombre de manipulations nécessaires en sortie de ligne et des gains de productivité importants.

## Revendications

1. Dispositif (100) de préhension d'au moins un produit alimentaire déformable (10), comprenant :
au moins une plaque perforée (112) définissant au moins une surface (130) de réception du produit alimentaire déformable (10), la surface de réception (130) étant convexe et
- pour la ou chaque surface de réception (130), une paire d'aiguilles (182, 184) associée à ladite surface de réception (130), chaque aiguille (182, 184) de ladite paire étant apte à être déplacée entre une position rétractée, dans laquelle l'aiguille (182, 184) ne traverse pas la surface de réception (130), et une position déployée, dans laquelle l'aiguille (182, 184) traverse la surface de réception (130), la ou chaque plaque perforée (112) présentant, pour la ou chaque surface de réception (130) définie par ladite plaque perforée (112), au moins deux orifices traversants (140) débouchant chacun dans ladite surface de réception (130), chaque aiguille (182, 184) de la paire associée à cette surface de réception (130) s'étendant, lorsqu'elle est en position déployée, à travers un orifice traversant respectif parmi lesdits orifices traversants (140) ;
**caractérisé en ce que**
le dispositif de préhension (100) comprend un système de soufflage apte à souffler du gaz à travers la ou chaque surface de réception (130), le système de soufflage étant de préférence apte à souffler de l'air à travers lesdits orifices traversants (140),
le système de soufflage comprenant, pour chaque surface de réception (130), au moins une buse de soufflage (166) débouchant à proximité des orifices traversants (140) débouchant dans ladite surface de réception (130), chaque buse de soufflage (166) présentant préférentiellement un diamètre inférieur 5 mm,
la ou chaque surface de réception (130) étant allongée suivant une direction principale (Y), et les buses de soufflage (166) comprenant au moins deux buses de soufflage encadrant selon une direction orthogonale à la direction principale (Y) les orifices traversants (140) débouchant dans ladite surface de réception (130).

2. Dispositif de préhension (100) selon la revendication 1, dans lequel le système de soufflage comprend un dispositif (107) de fourniture de gaz sous pression, apte à fournir un gaz à une pression comprise entre 1 bar et 3 bars, par exemple entre 1 bar et 2,5 bars.

3. Dispositif de préhension (100) selon la revendication 1 ou 2, dans lequel les surfaces de réception (130) sont une pluralité, au moins une buse de soufflage (166) étant disposée sensiblement à équidistance d'un premier orifice traversant (140) débouchant dans une première desdites surfaces de réception (130) et d'un deuxième orifice traversant (140) débouchant dans une deuxième desdites surfaces de réception (130).

4. Dispositif de préhension (100) selon l'une quelconque des revendications précédentes, dans lequel chaque aiguille (182, 184) est montée rotative autour d'un axe de rotation (188, 190) par rapport à la plaque perforée (112) entre ses positions rétractée et déployée, chaque aiguille (182, 184) étant en outre en forme d'arc de cercle centré sur ledit axe de rotation (188, 190).

5. Dispositif de préhension (100) selon la revendication 4, dans lequel les axes de rotation (188, 190) des deux aiguilles (182, 184) d'une même paire sont sensiblement parallèles l'un à l'autre, le sens de rotation d'une première aiguille (182) de la paire depuis sa position rétractée vers sa position déployée étant inverse au sens de rotation de la deuxième aiguille (184) de la paire depuis sa position rétractée vers sa position déployée.

6. Dispositif de préhension (100) selon la revendication 4 ou 5, dans lequel il existe une droite (191) sensiblement parallèle aux axes de rotation (188, 190) des aiguilles (182, 184) d'une même paire telle que, lorsque lesdites aiguilles (182, 184) sont en position déployée, cette droite (191) passe par lesdites aiguilles (188, 190).

7. Dispositif de préhension (100) selon l'une quelconque des revendications précédentes, dans lequel chaque aiguille (182, 184) présente un diamètre inférieur ou égal à 5 millimètres, de préférence inférieur ou égal à 2 millimètres.

8. Installation (2) de production de produits alimentaires déformables (10) comprenant chacun une enveloppe extérieure (12) en un premier matériau alimentaire et un fourrage intérieur (14) en un deuxième matériau alimentaire, l'installation (2) comprenant :
- un poste (22) de fourniture d'une feuille (24) de premier matériau alimentaire,
- un système (26) de fourniture d'un rouleau (28) de deuxième matériau alimentaire,
- un poste (32) d'enroulement de la feuille (24) autour du rouleau (28),
- un poste (38) de découpe du rouleau (28) et de la feuille (24) enroulée autour en une pluralité de tronçons (39) formant chacun un produit alimentaire déformable (10), et
- un poste (44) d'emballage des produits alimentaires déformables (10), comprenant un dispositif de préhension (100) selon l'une quelconque des revendications précédentes pour la saisie des produits alimentaires déformables (10) et la dépose desdits produits alimentaires déformables (10) dans des contenants.

9. Procédé de déplacement d'un produit alimentaire déformable (10) au moyen d'un dispositif de préhension (100) selon l'une quelconque des revendications 1 à 7, **caractérisé en ce qu'**il comprend les étapes successives suivantes :
- amenée d'une surface de réception (130) au-dessus du produit alimentaire déformable (10),
- déploiement de la paire d'aiguilles (182, 184) associée à la surface de réception (130), les aiguilles (182, 184) pénétrant dans le produit alimentaire déformable (10),
- déplacement du dispositif de préhension (100), et
- rétractation de ladite paire d'aiguilles (182, 184).

10. Procédé de déplacement selon la revendication 9, dans lequel le produit alimentaire déformable (10) comprend une enveloppe extérieure (12) en un premier matériau alimentaire et un fourrage intérieur (14) en un deuxième matériau alimentaire.

## Patentansprüche

1. Vorrichtung (100) zum Greifen von mindestens einem verformbaren Lebensmittelprodukt (10), umfassend:
- mindestens eine perforierte Platte (112), die mindestens eine Fläche für den Empfang (130) des verformbaren Lebensmittelprodukts (10) definiert, wobei die Empfangsfläche (130) konvex ist, und
- für die oder jede Empfangsfläche (130) ein Paar Nadeln (182, 184), das der Empfangsfläche (130) zugeordnet ist, wobei jede Nadel (182, 184) des Paares imstande ist, zwischen einer eingefahrenen Position, in der die Nadel (182, 184) die Empfangsfläche (130) nicht durchquert, und einer ausgefahrenen Position, in der die Nadel (182, 184) die Empfangsfläche (130) durchquert, verlagerbar ist, wobei die oder jede perforierte Platte (112) für die oder jede durch die perforierte Platte (112) definierte Empfangsfläche (130) mindestens zwei Durchgangsöffnungen (140) aufweist, die jeweils in die Empfangsfläche (130) münden, wobei sich jede Nadel (182, 184) des dieser Empfangsfläche (130) zugeordneten Paares in der ausgefahrenen Position durch eine jeweilige der Durchgangsöffnungen (140) erstreckt;
**dadurch gekennzeichnet, dass** die Greifvorrichtung (100) ein Blassystem umfasst, das imstande ist, Gas durch die oder jede Empfangsfläche (130) zu blasen, wobei das Blassystem vorzugsweise geeignet ist, Luft durch die Durchgangsöffnungen (140) zu blasen,
wobei das Blassystem für jede Empfangsfläche (130) mindestens eine Blasdüse (166) umfasst, die in der Nähe der Durchgangsöffnungen (140) mündet, die in die Empfangsfläche (130) münden, wobei jede Blasdüse (166) vorzugsweise einen Durchmesser von weniger als 5 mm aufweist,
wobei die oder jede Empfangsfläche (130) gemäß einer Hauptrichtung (Y) langgestreckt ist und die Blasdüsen (166) mindestens zwei Blasdüsen umfassen, die in einer zur Hauptrichtung (Y) orthogonalen Richtung die in die Empfangsfläche (130) mündenden Durchgangsöffnungen (140) einrahmen.

2. Greifvorrichtung (100) nach Anspruch 1, wobei das Blassystem eine Vorrichtung (107) zur Bereitstellung von Druckgas umfasst, die geeignet ist, ein Gas mit einem Druck zwischen 1 bar und 3 bar, beispielsweise zwischen 1 bar und 2,5 bar, bereitzustellen.

3. Greifvorrichtung (100) nach Anspruch 1 oder 2, wobei die Empfangsflächen (130) eine Vielzahl sind, wobei mindestens eine Blasdüse (166) im Wesentlichen in gleichem Abstand von einer ersten Durchgangsöffnung (140), die in eine erste der Empfangsflächen (130) mündet, und einer zweiten Durchgangsöffnung (140), die in eine zweite der Empfangsflächen (130) mündet, angeordnet ist.

4. Greifvorrichtung (100) nach einem der vorhergehenden Ansprüche, wobei jede Nadel (182, 184) um eine Drehachse (188, 190) relativ zu der perforierten Platte (112) zwischen ihrer eingefahrenen und ausgefahrenen Position drehbar gelagert ist, wobei jede Nadel (182, 184) ferner die Form eines Kreisbogens hat, der auf der Drehachse (188, 190) zentriert ist.

5. Greifvorrichtung (100) nach Anspruch 4, wobei die Drehachsen (188, 190) der beiden Nadeln (182, 184) desselben Paares im Wesentlichen parallel zueinander sind, wobei die Drehrichtung einer ersten Nadel (182) des Paares aus ihrer eingefahrenen Position in ihre ausgefahrene Position umgekehrt zur Drehrichtung der zweiten Nadel (184) des Paares aus ihrer eingefahrenen Position in ihre ausgefahrene Position ist.

6. Greifvorrichtung (100) nach Anspruch 4 oder 5, wobei es eine Gerade (191) gibt, die im Wesentlichen parallel zu den Drehachsen (188, 190) der Nadeln (182, 184) desselben Paares verläuft, so dass, wenn sich die Nadeln (182, 184) in der ausgefahrenen Position befinden, diese Gerade (191) durch die Nadeln (188, 190) verläuft.

7. Greifvorrichtung (100) nach einem der vorhergehenden Ansprüche, wobei jede Nadel (182, 184) einen Durchmesser von unter oder gleich 5 Millimetern, vorzugsweise von unter oder gleich 2 Millimetern, aufweist.

8. Anlage (2) zur Herstellung von verformbaren Lebensmittelprodukten (10), die jeweils eine äußere Hülle (12) aus einem ersten Lebensmittelmaterial und eine innere Füllung (14) aus einem zweiten Lebensmittelmaterial umfassen, wobei die Anlage (2) umfasst:
- eine Station (22) zum Bereitstellen einer Bahn (24) aus einem ersten Lebensmittelmaterial,
- ein System (26) zum Bereitstellen einer Rolle (28) aus einem zweiten Lebensmittelmaterial,
- eine Station (32) zum Wickeln der Bahn (24) um die Rolle (28),
- eine Station (38) zum Schneiden der Rolle (28) und der darum gewickelten Bahn (24) in eine Vielzahl von Abschnitten (39), die jeweils ein verformbares Lebensmittelprodukt (10) bilden, und
- eine Station (44) zum Verpacken der verformbaren Lebensmittelprodukte (10), die eine Greifvorrichtung (100) nach einem der vorhergehenden Ansprüche zum Ergreifen der verformbaren Lebensmittelprodukte (10) und zum Ablegen der verformbaren Lebensmittelprodukte (10) in Behältnisse umfasst.

9. Verfahren zum Verlagern eines verformbaren Lebensmittelprodukts (10) mittels einer Greifvorrichtung (100) nach einem der Ansprüche 1 bis 7, **dadurch gekennzeichnet, dass** es die folgenden aufeinanderfolgenden Schritte umfasst:
- Heranführen einer Empfangsfläche (130) über das verformbare Lebensmittelprodukt (10),
- Ausfahren des der Empfangsfläche (130) zugeordneten Paares Nadeln (182, 184), wobei die Nadeln (182, 184) in das verformbare Lebensmittelprodukt (10) eindringen,
- Verlagern der Greifvorrichtung (100), und
- Zurückziehen des Paares Nadeln (182, 184).

10. Verlagerungsverfahren nach Anspruch 9, wobei das verformbare Lebensmittelprodukt (10) eine äußere Hülle (12) aus einem ersten Lebensmittelmaterial und eine innere Füllung (14) aus einem zweiten Lebensmittelmaterial umfasst.

## Claims

1. A gripping device (100) for at least one deformable food product (10), comprising:
- at least one perforated plate (112) defining at least one receiving surface (130) for the deformable food product (10), the receiving surface (130) being convex and
- for the or each receiving surface (130), a pair of needles (182, 184) associated with said receiving surface (130), each needle (182, 184) of said pair being able to be moved between a retracted position, in which the needle (182, 184) does not pass through the receiving surface (130), and a deployed position, in which the needle (182, 184) passes through the receiving surface (130), the or each perforated plate (112) having, for the or each receiving surface (130) defined by said perforated plate (112), at least two through orifices (140) each emerging in said receiving surface (130), each needle (182, 184) of the pair associated with this receiving surface (130) extending, when it is in the deployed position, through a respective through orifice among said through orifices (140);
the gripping device (100) comprises a blowing system able to blow gas through the or each receiving surface (130), the blowing system preferably being able to blow air through said through orifices (140), the blowing system comprising, for each receiving surface (130), at least one blowing nozzle (166) emerging near through orifices (140) emerging in said receiving surface (130), each blowing nozzle (166) preferably having a diameter smaller than 5 mm,
the or each reception surface (130) is elongated along a main direction (Y), and the blowing nozzles (166) comprise at least two blowing nozzles framing, along a direction orthogonal to the main direction (Y), the through orifices (140) emerging in said reception direction (130).

2. The gripping device (100) according to claim 1, wherein the blowing system comprises a pressurized gas supply system (107), able to supply a gas at a pressure of between 1 bar and 3 bars, for example between 1 bar and 2.5 bars.

3. The gripping device (100) according to claim 1 or 2, wherein the reception surfaces (130) are a plurality, at least one blowing nozzle (166) being positioned substantially equidistant from a first through orifice (140) emerging in a first of said reception surfaces (130) and a second through orifice (140) emerging in a second of said reception surfaces (130).

4. The gripping device (100) according to any one of the preceding claims, wherein each needle (182, 184) is mounted rotating around a rotation axis (188, 190) relative to the perforated plate (112) between its retracted and deployed positions, each needle (182, 184) further being in the shape of an arc of circle centered on said rotation axis (188, 190).

5. The gripping device (100) according to claim 10, wherein the rotation axes (188, 190) of the two needles (182, 184) of a same pair are substantially parallel to one another, the rotation direction of a first needle (182) of the pair from its retracted position toward its deployed position being opposite the rotation direction of the second needle (184) of the pair from its retracted position to its deployed position.

6. The gripping device (100) according to claim 4 or 5, wherein there is a straight line (191) substantially parallel to the rotation axes (188, 190) of the needles (182, 184) of a same pair such that, when said needles (182, 184) are in the deployed position, this line (191) passes through said needles (188, 190).

7. The gripping device (100) according to any one of the preceding claims, wherein each needle (182, 184) has a diameter smaller than or equal to 5 millimeters, preferably smaller than or equal to 2 millimeters.

8. A facility (2) for producing deformable food products (10) each comprising an outer envelope (12) made from a first food product and an inner filling (14) made from a second food product, the facility (2) comprising:
- a station (22) for supplying a sheet (24) of first food material,
- a system (26) for supplying a roll (28) of second food material,
- a station (32) for wrapping the sheet (24) around the roll (28),
- a station (38) for cutting the roll (28) and the sheet (24) wrapped around into a plurality of segments (39) each forming a deformable food product (10), and
- a station (44) for packaging deformable food products (10), comprising a gripping device (100) according to any one of the preceding claims for gripping deformable food products (10) and depositing said deformable food products (10) into containers.

9. A method for moving a deformable food product (10) using a gripping device (100) according to any one of claims 1 to 7, **characterized in that** it comprises the following successive steps:
- bringing a receiving surface (130) above the deformable food product (10),
- deploying the pair of needles (182, 184) associated with the receiving surface (130), the needles (182, 184) penetrating into the deformable food product (10),
- moving the gripping device (100), and
- retracting said pair of needles (182, 184).

10. The movement method according to claim 9, wherein the deformable food product (10) comprises an outer envelope (12) made from a first food product and an inner filling (14) made from a second food product.
